# EUROPEAN PATENT SPECIFICATION

(11) **EP 2 703 665 B1**
(45) Date of publication and mention of the grant of the patent: **27.05.2015**
(21) Application number: 12306025.3
(22) Date of filing: 27.08.2012
(51) Int. Cl.: F16C 23/08, F16C 35/073, F16C 43/04, F16C 21/00, F16C 23/04, A01B 71/04, F16C 19/18

(54) **Outer double-row ball bearing assembly combined with inner plain bearing**
Äußere zweireihige Kugellageranordnung in Kombination mit einem inneren Gleitlager
Ensemble de roulement à billes à double rangée externe combiné à un palier lisse interne

(43) Date of publication of application: 05.03.2014
(73) Proprietor: NTN-SNR Roulements, 74000 Annecy (FR)
(72) Inventor: Wenzel, Henning, 33615 Bielefeld (DE)
(74) Representative: Bugnion Genève

(56) References cited:
- WO-A1-2010/124731
- DE-A1- 1 425 344
- DE-A1- 2 856 166
- DE-A1- 19 628 669
- DE-A1-102010 053 671
- FR-A- 1 000 496
- GB-A- 190 922 098
- US-A1- 2010 143 141

## Description

### TECHNICAL FIELD OF THE INVENTION

This invention relates to an agricultural machine provided with a bearing assembly for guiding a shaft, and in particular for guiding a drum shaft of the agricultural machine.

### BACKGROUND ART

An agricultural machine comprising a rotary drum, a lateral flange and at least one bearing assembly for connecting the drum to the lateral flange is disclosed in DE 28 56 166. The bearing assembly comprises a shaft end defining a geometrical shaft axis and provided with a convex annular slide bearing face around the shaft axis, the convex annular slide bearing face having a constant radius of curvature and a centre of curvature, the convex annular slide bearing face being located between two parallel geometrical transverse planes perpendicular to the shaft axis, the centre of curvature being located on the shaft axis between the two transverse planes at a distance of each of the transverse planes smaller than the radius of curvature. This slide bearing arrangement is subject to intense wear.

The drum of an agricultural machine is usually provided with two coaxial shafts, each welded to a planar end face of the drum and protruding towards a lateral flange of the agricultural machine. Each shaft is provided with a protruding cylindrical end, journalled in a roller bearing. The outer race ring of the roller bearing has an outer convex spherical face and is received into a spherical cavity of a bracket rigidly attached to the associated lateral flange of the agricultural machine. A spherical slide bearing is formed by the outer race ring and spherical cavity. This spherical slide bearing is aimed at compensating misalignments between the two lateral flanges of the machine and the common geometrical axis defined by the two welded shafts and perpendicular to the parallel planar faces of the drum.

This arrangement presents a number of disadvantages. In theory, the spherical slide bearing should take a their operational position to compensate the misalignment of the lateral flanges of the machine only once during the initial assembly of the drum on the machine. However, because a perfect alignment between the two shaft ends is never obtained in practice, the roller bearings permanently move inside the spherical cavities and the two spherical surfaces are rapidly worn and damaged as a result. In case of maintenance, the shaft ends have to be destroyed and new ones are welded to the drum, which causes further inaccuracies. Hence, the costs of maintenance are high and the lifetime of the replaced items is much shorter than the original ones.

A compound bearing including an external roller bearing provided with two rows of balls, and a spherical plain bearing located inside the roller bearing is disclosed in DE 1 962 86 69. More specifically, the spherical plain bearing includes a slotted convex spherical support element consisting of a plurality of segments rigidly fixed to a fixed shaft. This convex spherical support element is received in a spherical cavity of a sleeve on which the two inner rings of the roller bearing are mounted. The support element can be radially expanded by means of a wedge moved by the axial adjustment of a tightened nut. Before radial expansion, its diameter is such that it can be readily inserted into the cavity. The outer ring of the roller bearing has an outer cylindrical face and is used a roller for a belt tensioner.

This arrangement, however, is not adapted to the specific conditions encountered with agricultural machines working in the fields.

Hence, there is a need for a bearing particularly adapted to an agricultural machine, which is easy to manufacture and replace and which has a longer lifetime.

Embodiments of a bi-axial compliant bearing assembly for an helicopter rotor and methods of assembling the bi-axial compliant bearing assembly are disclosed in US2010143141. A bi-axial compliant bearing assembly employs a transition bearing race. The transition bearing race comprises a cylindrical surface. The cylindrical surface is configured to rotatably engage a rotational bearing element and to slidably engage the rotational bearing element along an axis. The transition bearing race also includes a spherically-compliant surface. The spherically-compliant surface is configured to engage a spherically-compliant element and to enable the spherically-compliant element to rotate transversely to the axis.

### SUMMARY OF THE INVENTION

The foregoing shortcomings of the prior art are addressed by the present invention. According the invention, there is provided an agricultural machine comprising a rotary drum, a lateral flange and at least one bearing assembly for connecting the drum to the lateral flange, the bearing assembly comprising:
- a shaft end defining a geometrical shaft axis and provided with a convex annular slide bearing face around the shaft axis, the convex annular slide bearing face having a constant radius of curvature and a centre of curvature, the convex annular slide bearing face being located between two parallel geometrical transverse planes perpendicular to the shaft axis, the centre of curvature being located on the shaft axis between the two transverse planes at a distance of each of the transverse planes smaller than the radius of curvature, wherein the shaft end has a protruding portion extending outside the space delimited by the two transverse planes and entirely located within a spherical envelope, the spherical envelope having a centre which is the centre of curvature of the convex annular slide bearing face and a diameter;
- a roller bearing comprising an outer race ring assembly, an inner race ring assembly and two annular rows of rolling bodies which roll between annular raceways formed on the inner and outer race ring assemblies to define a rotation axis of the roller bearing; wherein the inner race ring assembly forms:
   - a cavity with a concave annular slide bearing face having a centre of curvature located on the rotation axis and a constant radius of curvature equal to or larger than the radius of curvature of the convex annular slide bearing face of the shaft end, and
   - a cylindrical insertion hole having a diameter which is smaller than twice the radius of curvature of the concave annular slide bearing face and greater than the diameter of the spherical envelope containing the protruding portion and provided with an insertion slot formed on two diametrically opposite portions of the cylindrical insertion hole and having a width measured in a transverse plane perpendicular to the rotation axis and a length measured in the transverse plane, the width being larger than the distance between the two parallel geometrical planes, the length being larger than twice the radius of curvature of the convex annular slide bearing face, the slot being shaped so as to allow the insertion of the shaft end into the cavity.

The shaft end constitutes with the cavity of the inner race ring assembly a spherical plain bearing located within the roller bearing assembly to form a compound bearing.

Thanks to the insertion slot, the shaft end can very easily be inserted and keyed into the cavity of the inner race ring assembly. For the assembly process, the shaft end is placed with its shaft axis perpendicular to the rotation axis of the inner ring, such that the two parallel geometrical planes enclosing the shaft end are aligned with the slots. In this position, the shaft end can be inserted through the slot into the cavity. Once in the cavity, the shaft end is simply turned such that the shaft axis more or less aligns with the rotation axis. In this position, the shaft end is encased into the cavity. Disassembly is carried out in the same way.

The centre of curvature of the concave annular slide bearing face is preferably located axially between the two rows of rolling bodies and is preferably equidistant from the two rows of rolling bodies, to achieve a symmetrical distribution of the forces on the two rows of rolling bodies.

According to a preferred embodiment, the rolling bodies are balls. However cylindrical or tapered rollers, or a combination of various rolling bodies is also contemplated.

According to a preferred embodiment each row of balls forms with the associated inner and outer raceways an angular contact ball bearing and the contact lines that cross the contact points of the balls of one row with the inner and outer raceways are located on one cone which has an apex located on the rotation axis. In this way, the roller bearing can accommodate both axial and radial loads. Preferably, each cone points away from the other cone to form a double row angular contact ball bearing in O-arrangement.

According to a preferred embodiment, the inner race ring assembly comprises an inner sleeve on which the concave annular slide bearing face is formed and one or more inner race rings fitted on the sleeve and each provided with at least one of the raceways. In this way, a conventional roller bearing can be used in conjunction with the inner sleeve.

According to one embodiment, the one or more inner race rings consist of two individual inner race rings each provided with one of the annular raceways.

According to one embodiment, the inner sleeve has a thrust shoulder on which one of the one or more inner race rings bears. The inner race rings can be fitted on the sleeve and pressed against the thrust shoulder by a thrust nut. The assembly of the different parts of the inner race ring assembly is particularly simple.

According to a preferred embodiment, the outer race ring assembly consists of a single massive outer race ring, which confers a high stiffness to the whole assembly.

According to a preferred embodiment, the shaft end consists of a single massive part in one piece, which also contributes to the high rigidity of the assembly.

The shaft end can be an integral part of a shaft, in particular a fixed shaft secured to a lateral flange of an agricultural machine for guiding a drum. Alternatively, the shaft end is provided with an attachment interface for securing the shaft end to a shaft.

According to a preferred embodiment the outer race ring is a fixed to a rotating machine part while the shaft end is fixed to a non rotating machine part.

The outer race ring assembly is preferably rigidly fixed to the drum and the shaft end is rigidly fixed to the lateral flange. Because the two opposed ends of the drum are perfectly planar and parallel surfaces, this arrangement ensures that the spherical bearing will take a permanent operational position once the drum is attached to the flange, and will not permanently rotate when the machine is used.

### DESCRIPTION OF THE FIGURES

Illustrative embodiments of the invention will now be described, purely by way of examples and without limitation to the scope of the claims, and with reference to the accompanying drawings, in which:
- Fig. 1 is an axial section of roller bearing assembly through a plane I-I;
- Fig. 2 is another axial section of the roller bearing assembly of Fig. 1 through a plane II-II;
- Fig. 3 is an axial section of a compound bearing assembly through the plane I-I, including the roller bearing assembly of Fig. 1 and a shaft end, in an intermediate position during assembly;
- Fig. 4 is an another axial section of the compound bearing assembly through the plane II-II, in the intermediate position during assembly;
- Fig. 5 is an axial section of a compound bearing assembly through the plane I-I, after assembly;
- Fig. 6 is an another axial section of the compound bearing assembly through the plane II-II, after assembly;
- Fig. 7 is a schematic view of the compound bearing assembly of Figs. 1 to 6, used to support a drum of an agricultural machine;

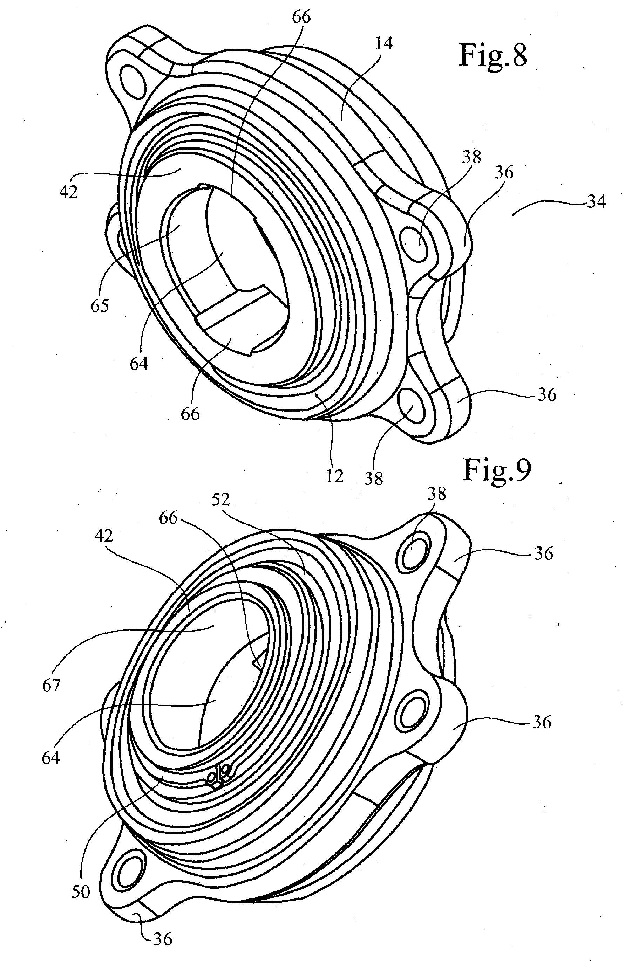

- Fig. 8 is an isometric view of the roller bearing assembly of Fig. 1; and
- Fig. 9 is another isometric view of the roller bearing assembly of Fig. 1.

Corresponding reference numerals refer to the same or corresponding parts in each of the figures.

### DETAILED DESCRIPTION OF A PREFERED EMBODIMENT

Referring to the figures, a compound bearing assembly **10** for an agricultural machine comprises a roller bearing **12,** which includes an outer race ring assembly **14,** an inner race ring assembly **16** and two annular rows **18, 20** of rolling bodies **22,** in this embodiment balls, which roll between associated annular raceways **24, 26, 28, 30** formed on the inner and outer race ring assemblies to define a rotation axis **32** of the roller bearing **12.**

More specifically, the outer race ring assembly **14** consists of a massive outer race ring **14** made of one piece and provided with two outer raceways **24, 26** and with a fastening interface **34** for securing the outer race ring assembly to a machine element, e.g. a rotating drum of an agricultural machine or another heavy rotating element. In this embodiment, the fastening interface **34** consists of four ears **36** each provided with a through hole **38.**

The inner race ring assembly **16** comprises a massive inner sleeve **42** made in one piece and provided with a thrust shoulder **44,** two individual inner race rings **46, 48** fitted on the sleeve **42** and each provided with one raceway **28, 30,** a spring retaining ring **50** and a thrust washer **52** for pressing the inner race rings **46, 48** against the thrust shoulder **44.**

Each annular row **18, 20** of balls **22** is guided in a cage **54, 55** and forms with the associated inner and outer raceways **24, 26, 28, 30** an angular contact ball bearing. The contact lines **56, 57** that cross the points of contact of the balls **22** of one row **18,** resp. **20** with the outer and inner raceways **24, 26, 28, 30** are located on a common cone of contact which has an apex **A1,** resp. **A2** located on the rotation axis **32.** Each cone points away from the other cone to form a double row angular contact ball bearing **12** in O-arrangement. The angle of each cone is preferably greater than 90°, preferably greater than 120° and smaller than 150°.

A cavity **62** with a concave annular slide bearing face **64** is formed in the inner sleeve **42** of the inner ring assembly **16.** The slide bearing face **64** has a spherical envelope, i.e. it has a constant radius of curvature **R1** equal to or larger than the radius of curvature of the convex annular slide bearing face of the shaft end, and a centre of curvature **C1** located on the rotation axis **32,** axially between the two rows of balls **18, 20** and approximately equidistant from the apexes **A1**, **A2** of the two cones of contact.

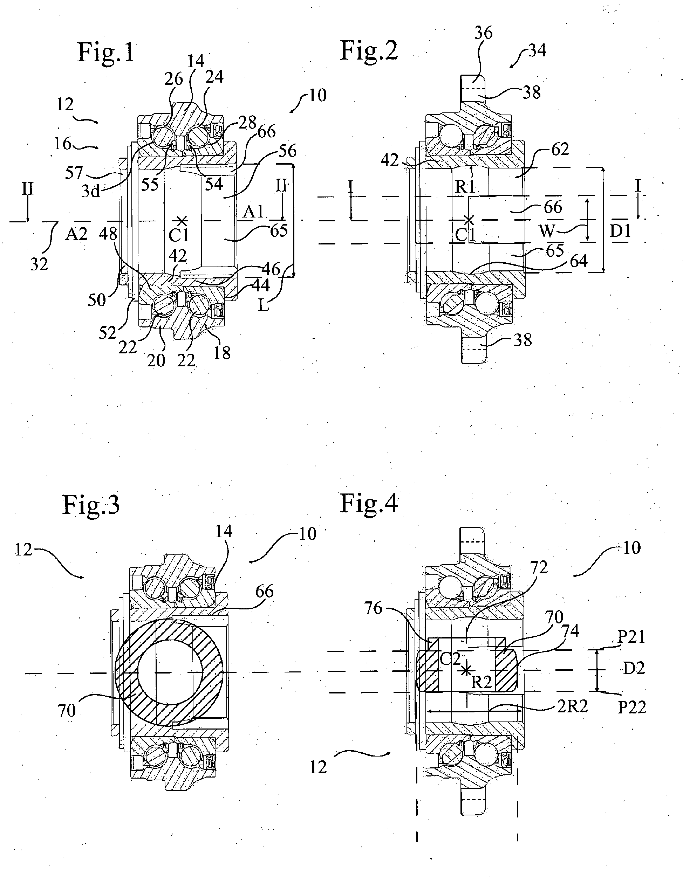

The cavity **62** is provided with a cylindrical insertion hole **65** and an insertion slot **66** for inserting a shaft end **70** depicted in figures **3** to **6****.** The slide bearing face **64** is located axially between the insertion hole **65** and a cylindrical access hole **67,** which has the same diameter as the insertion hole **65.** The insertion hole **65** has a diameter **D1** which is slightly smaller than the diameter **2xR1** of the spherical envelope of the slide bearing face **64.** The slot **66** is formed on two diametrically opposite portions of the cylindrical insertion holes **65** to allow the insertion of the shaft end **70** into the cavity **62.** The shaft end **70** itself is made in one massive piece and defines a geometrical shaft axis **72.** The shaft end **70** is provided with a convex annular slide bearing face **74** around the shaft axis **72.** The convex annular slide bearing face **74** has a spherical envelope, i.e. it has a constant radius of curvature R2 and a centre of curvature **C2** located on the shaft axis **72**. The convex annular slide bearing face **74** is located between two parallel geometrical transverse planes **P21, P22** perpendicular to the shaft axis **72.** The centre of curvature is located between the two transverse planes **P21, P22** at a distance of each of the transverse planes **P21, P22** smaller than the radius of curvature **R2**.

The shaft end **70** may have a protruding portion **76,** extending outside the space delimited by the two planes **P21, P22.** However, the dimensions of this protruding portion **76** of the shaft end **70** are such that the protruding portion is entirely located within a spherical envelope defined by the centre of curvature **C2** and a diameter smaller than the diameter **D2** of the cylindrical insertion hole **65.** The width W of the slot **66** measured a transverse plane perpendicular to the rotation axis is larger than the distance D between the two parallel geometrical planes **P21, P22.** The length L of the slot measured in the transverse plane is larger than the diameter 2R2 of the convex annular slide bearing face **74**.

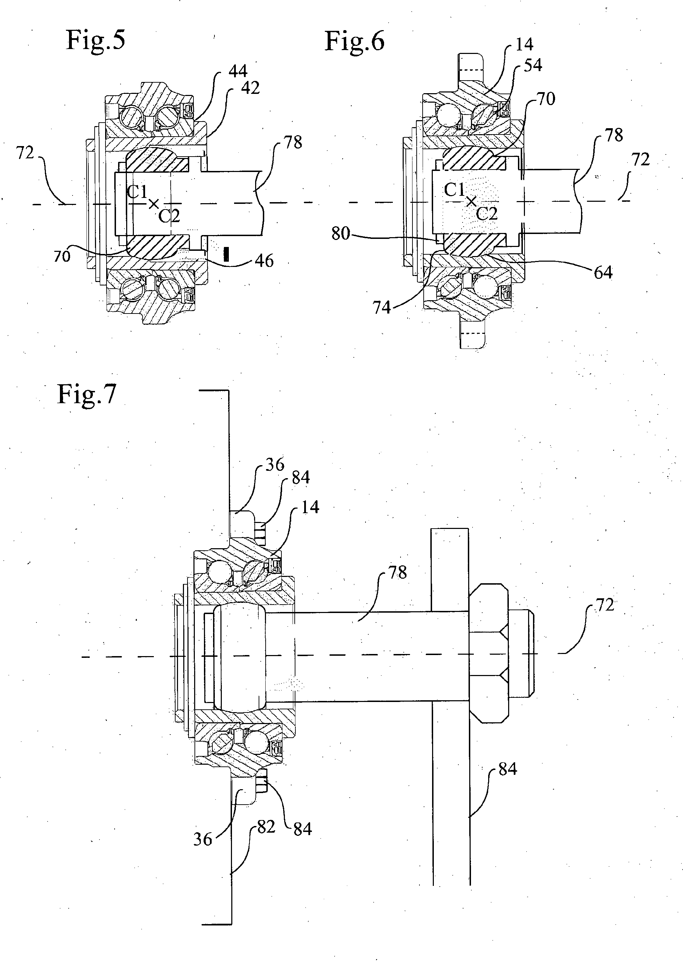

Thanks to the insertion slot **66,** the shaft end **70** can very easily be inserted into the cavity **62** of the inner race ring assembly **16.** The shaft end **70** is placed as illustrated in Fig. **3** and **4** with its shaft axis **72** perpendicular to the rotation axis **32** of the inner ring assembly **16,** such that the two parallel geometrical planes **P21, P22** enclosing the convex annular slide bearing face **74** are aligned with the slot **66.** In this position, the shaft end **70** can be inserted through the slot **66** into the cavity **62.** Once in the cavity **62,** the shaft end **70** is simply turned such that the shaft axis **72** more or less aligns with the rotation axis **32,** as shown in Figs. **5** and **6****.** In this position, the shaft end **70** is encased into the cavity **62.** Disassembly is carried out in the same way.

As illustrated in Fig. **6****,** the shaft end **70** is fixed to a shaft **78** by means of a spring retaining ring **80.**

As illustrated in Fig. **7****,** the outer race ring **14** is fixed to a heavy rotating machine part, in this instance a drum **82** of an agricultural machine by means of bolts **84,** while the shaft **78** is fixed to a non-rotating machine part, in the present case a lateral flange **84** of the agricultural machine.

While the above example illustrates preferred embodiments of the present invention, it is noted that various other arrangements may also be considered, which fall within the scope of the appended claims. The outer race ring assembly 14 can be fixed to the machine part 82 by any known means. Caulking, i.e. radial deformation of the axial end of the inner sleeve 42 can be used instead of a spring retaining ring 50 to secure the two inner rings on the sleeve. The attachment of the shaft end 70 to the shaft can be obtained by any known means, e.g. bolts or a threaded portion screwed onto the shaft 78.

## Claims

1. An agricultural machine comprising a rotary drum (82), a lateral flange (84) and at least one bearing assembly (10) for connecting the drum (82) to the lateral flange (84), the bearing assembly (10) comprising:
- a shaft end (70) defining a geometrical shaft axis (72) and provided with a convex annular slide bearing face (74) around the shaft axis (72), the convex annular slide bearing face (74) having a constant radius of curvature (R2) and a centre of curvature (C2), the convex annular slide bearing face (74) being located between two parallel geometrical transverse planes (P21, P22) perpendicular to the shaft axis (72), the centre of curvature (C2) being located on the shaft axis (72) between the two transverse planes (P21, P22) at a distance of each of the transverse planes (P21, P22) smaller than the radius of curvature (R2);
**characterised in that** the bearing assembly further comprises:
- a roller bearing (12) comprising an outer race ring assembly (14), an inner race ring assembly (16) and two annular rows (18, 20) of rolling bodies (22) which roll between associated annular raceways (24, 26, 28, 30) formed on the inner and outer race ring assemblies (16, 14) to define a rotation axis (32) of the roller bearing (12);
wherein the inner race ring assembly (16) includes:
- a cavity (62) with a concave annular slide bearing face (64) having a centre of curvature (C1) located on the rotation axis (32) and a constant radius of curvature (R1) equal to or larger than the radius of curvature (R2) of the convex annular slide bearing face (74) of the shaft end (70), and
- a cylindrical insertion hole (65) having a diameter (D1) which is smaller than twice the radius of curvature of the concave annular slide bearing face (64) and provided with an insertion slot (66) formed on two diametrically opposite portions of the cylindrical insertion hole (65) and having a width (W) measured in a transverse plane perpendicular to the rotation axis (32) and a length (L) measured in the transverse plane, the width (W) being larger than a distance (D2) between the two parallel geometrical planes (P21, P22), the length (L) being larger than twice the radius of curvature (R2) of the convex annular slide bearing face (74), the insertion slot (66) being shaped to allow the insertion of the shaft end (70) into the cavity (62),
and wherein the shaft end (70) has a protruding portion (76) extending outside the space delimited by the two transverse planes (P21, P22) and entirely located within a spherical envelope, the spherical envelope having a centre which is the centre of curvature (C2) of the convex annular slide bearing face (74) and a diameter smaller than the diameter (D2) of the cylindrical insertion hole (65).

2. The agricultural machine of claim 1, **characterised in that** the centre of curvature (C1) of the concave annular slide bearing face (64) is located axially between the two rows (18, 20) of rolling bodies.

3. The agricultural machine of any one of the preceding claims, **characterised in that** the rolling bodies (22) are balls.

4. The agricultural machine of claim 3, **characterised in that** each row (18, 20) of balls (22) forms with the associated inner and outer raceways (24, 26, 28, 30) an angular contact ball bearing.

5. The agricultural machine of claim 4, **characterised in that** the roller bearing (12) is a double row angular contact ball bearing in O-arrangement.

6. The agricultural machine of any one of the preceding claims, **characterised in that** the inner race ring assembly (16) comprises:
- an inner sleeve (42) on which the concave annular slide bearing face (64) is formed and
- one or more inner race rings (46, 48) fitted on the inner sleeve (42) and each provided with at least one of the raceways (28, 30).

7. The agricultural machine of claim 6, **characterised in that** the one or more inner race rings (46, 48) consist of two inner race rings (46, 48) each provided with one of the annular raceways (28, 30).

8. The agricultural machine of claim 6 or claim 7, **characterised in that** the inner sleeve (42) has a thrust shoulder (44) on which one of the one or more inner race rings (46, 48) bears.

9. The agricultural machine of any one of claims 6 to 8, **characterised in that** the inner sleeve (42) is a massive sleeve made in one piece.

10. The agricultural machine of any one of the preceding claims, **characterised in that** outer race ring assembly consists of a single massive outer race ring (14).

11. The agricultural machine of any one of the preceding claims, **characterised in that** the outer race ring assembly includes a fastening interface (34) for fastening the outer race ring to a machine part (82).

12. The agricultural machine of any one of the preceding claims, **characterised in that** the shaft end is a massive shaft end (70) made in one piece.

13. The agricultural machine of any one of the preceding claims, **characterised in that** the outer race ring assembly (14) is a fixed to a rotating machine part (82) while the shaft end is fixed to a non rotating machine part (84).

14. The agricultural machine of any one of the preceding claims, **characterised in that** the outer race ring assembly (14) is rigidly fixed to the drum (82) and the shaft end (70) is rigidly fixed to the lateral flange (84).

## Patentansprüche

1. Landwirtschaftliche Maschine, umfassend eine Drehtrommel (82), einen seitlichen Flansch (84) und mindestens eine Lageranordnung (10), um die Trommel (82) mit dem seitlichen Flansch (84) zu verbinden, wobei die Lageranordnung (10) Folgendes umfasst:
- ein Schaftende (70), das eine geometrische Schaftachse (72) definiert und mit einer konvexen ringförmigen Gleitlagerfläche (74) um die Schaftachse (72) ausgestattet ist, wobei die konvexe ringförmige Gleitlagerfläche (74) einen konstanten Krümmungsradius (R2) und einen Krümmungsmittelpunkt (C2) aufweist, wobei die konvexe ringförmige Gleitlagerfläche (74) zwischen zwei parallelen geometrischen Querebenen (P21, P22) angeordnet ist, die senkrecht zur Schaftachse (72) sind, wobei der Krümmungsmittelpunkt (C2) auf der Schaftachse (72) zwischen den zwei Querebenen (P21, P22) in einem Abstand von jeder der Querebenen (P21, P22) angeordnet ist, der kleiner als der Krümmungsradius (R2) ist,
**dadurch gekennzeichnet, dass** die Lageranordnung weiter Folgendes umfasst:
- ein Wälzlager (12), umfassend eine äußere Laufringanordnung (14), eine innere Laufringanordnung (16) und zwei ringförmige Reihen (18, 20) von Rollkörpern (22), die zwischen assoziierten ringförmigen Laufbahnen (24, 26, 28, 30) rollen, die auf den inneren und den äußeren Laufringanordnungen (16, 14) gebildet sind, um eine Rotationsachse (32) des Wälzlagers (12) zu definieren,
wobei die innere Laufringanordnung (16) Folgendes umfasst:
- einen Hohlraum (62) mit einer konvexen ringförmigen Gleitlagerfläche (64) mit einen Krümmungsmittelpunkt (C1), der sich auf der Rotationsachse (32) befindet, und einen konstanten Krümmungsradius (R1), der gleich oder größer als der Krümmungsradius (R2) der konvexen ringförmigen Gleitlagerfläche (74) des Schaftendes (70) ist,
- und ein zylindrisches Einführungsloch (65) mit einem Durchmesser (D1), der kleiner als zweimal der Krümmungsradius der konkaven ringförmigen Gleitlagerfläche (64) ist, und ausgestattet mit einem Einführungsschlitz (66), der auf zwei diametral entgegengesetzten Abschnitten des zylindrischen Einführungslochs (65) gebildet ist und eine Breite (W) aufweist, gemessen in einer Querebene, die senkrecht zur Rotationsachse (32) ist, und eine Länge (L), gemessen in der Querebene, wobei die Breite (W) größer als ein Abstand (D2) zwischen den zwei parallelen geometrischen Ebenen (P21, P22) ist, wobei die Länge (L) größer als zweimal der Krümmungsradius (R2) der konvexen ringförmigen Gleitlagerfläche (74) ist, wobei der Einführungsschlitz (66) geformt ist, um die Einführung des Schaftendes (70) in den Hohlraum (62) zu ermöglichen,
und wobei das Schaftende (70) einen hervorstehenden Abschnitt (76) aufweist, der sich außerhalb des Raums erstreckt, der von den zwei Querebenen (P21, P22) begrenzt ist und sich vollständig in einer sphärischen Umhüllung befindet, wobei die sphärische Umhüllung einen Mittelpunkt aufweist, der der Krümmungsmittelpunkt (C2) der konvexen ringförmigen Gleitlagerfläche (74) ist, und einen Durchmesser, der kleiner als der Durchmesser (D2) des zylindrischen Einführungslochs (65) ist.

2. Landwirtschaftliche Maschine nach Anspruch 1, **dadurch gekennzeichnet, dass** sich der Krümmungsmittelpunkt (C1) der konvexen ringförmigen Gleitlagerfläche (64) axial zwischen den zwei Reihen (18, 20) von Rollkörpern befindet.

3. Landwirtschaftliche Maschine nach einem der vorhergehenden Ansprüche, **dadurch gekennzeichnet, dass** die rollenden Körper (22) Kugeln sind.

4. Landwirtschaftliche Maschine nach Anspruch 3, **dadurch gekennzeichnet, dass** jede Reihe (18, 20) von Kugeln (22) mit den assoziierten inneren und äußeren Laufbahnen (24, 26, 28, 30) ein Schrägkugellager bildet.

5. Landwirtschaftliche Maschine nach Anspruch 4, **dadurch gekennzeichnet, dass** das Kugellager (12) ein Schrägkugellager mit doppelter Reihe in O-Anordnung ist.

6. Landwirtschaftliche Maschine nach einem der vorhergehenden Ansprüche, **dadurch gekennzeichnet, dass** die innere Laufringanordnung (16) Folgendes umfasst:
- eine innere Hülse (42), auf der die konkave ringförmige Gleitlagerfläche (64) gebildet ist, und
- einen oder mehrere Laufringe (46, 48), die auf der inneren Hülse (42) gepasst sind und jeweils mit mindestens einem der Laufbahnen (28, 30) ausgestattet ist.

7. Landwirtschaftliche Maschine nach Anspruch 6, **dadurch gekennzeichnet, dass** der eine oder die mehreren inneren Laufringe (46, 48) aus zwei inneren Laufringen (46, 48) bestehen, die jeweils mit einer der ringförmigen Laufbahnen (28, 30) ausgestattet sind.

8. Landwirtschaftliche Maschine nach Anspruch 6 oder Anspruch 7, **dadurch gekennzeichnet, dass** die innere Hülse (42) eine Abdrückschulter (44) aufweist, auf ein der einen oder der mehreren inneren Laufringe (46, 48) gelagert ist.

9. Landwirtschaftliche Maschine nach einem der Ansprüche 6 bis 8, **dadurch gekennzeichnet, dass** die innere Hülse (42) eine massive Hülse ist, die aus einem Stück hergestellt ist.

10. Landwirtschaftliche Maschine nach einem der vorhergehenden Ansprüche, **dadurch gekennzeichnet, dass** die äußere Laufringanordnung aus einem einzelnen massiven äußeren Laufring (14) besteht.

11. Landwirtschaftliche Maschine nach einem der vorhergehenden Ansprüche, **dadurch gekennzeichnet, dass** die äußere Laufringanordnung eine Befestigungsschnittstelle (34) umfasst, um den äußeren Laufring an einen Maschinenteil (82) zu befestigen.

12. Landwirtschaftliche Maschine nach einem der vorhergehenden Ansprüche, **dadurch gekennzeichnet, dass** das Schaftende ein massives Schaftende (70) ist, das aus einem Stück hergestellt ist.

13. Landwirtschaftliche Maschine nach einem der vorhergehenden Ansprüche, **dadurch gekennzeichnet, dass** die äußere Laufringanordnung (14) an einen drehenden Maschinenteil (82) befestigt ist, während das Schaftende an einen nicht drehenden Maschinenteil (84) befestigt ist.

14. Landwirtschaftliche Maschine nach einem der vorhergehenden Ansprüche, **dadurch gekennzeichnet, dass** die äußere Laufringanordnung (14) starr an die Trommel (82) befestigt ist und das Schaftende (70) starr an den seitlichen Flansch (84) befestigt ist.

## Revendications

1. Machine agricole comprenant un tambour tournant (82), un flasque latéral (84) et au moins un assemblage de palier (10) pour connecter le tambour (82) au flasque latéral (84), l'assemblage de palier (10) comprenant :
- une extrémité d'arbre (70) définissant un axe géométrique d'arbre (72) et pourvue d'une face de palier lisse annulaire convexe (74) autour de l'axe d'arbre (72), la face de palier lisse annulaire convexe (74) ayant un rayon de courbure (R2) constant et un centre de courbure (C2), la face de palier lisse annulaire convexe (74) étant située entre deux plans géométriques transversaux parallèles (P21, P22) à une distance de chacun des plans transversaux (P21, P22) plus petite que le rayon de courbure (R2);
**caractérisée en ce que** l'assemblage de palier comprend en outre:
- un palier à roulement (12) comportant un assemblage de bague de roulement extérieure (14), un assemblage de bague de roulement intérieure (16) et deux rangées annulaires (18, 20) de corps roulants (22) qui roulent entre des chemins de roulement (24, 26, 28, 30) formés sur les assemblages de bagues de roulement intérieure et extérieure (16, 14) pour définir un axe de rotation (32) du palier à roulement (12);
l'assemblage de bague de roulement intérieure (16) comportant:
- une cavité (62) avec une face de palier lisse annulaire concave (64) ayant un centre de courbure (C1) situé sur l'axe de rotation (32) et un rayon de courbure constant (R1) supérieur ou égal au rayon de courbure (R2) de la face de palier lisse annulaire convexe (74) de l'extrémité d'arbre (70), et
- un trou d'insertion cylindrique (65) ayant un diamètre (D1) qui est plus petit que le double du rayon de courbure de la face de palier lisse annulaire concave (64) et pourvu d'une fente d'insertion (66) formée sur deux portions diamétralement opposées du trou d'insertion cylindrique (65) et ayant une largeur (W) mesurée dans un plan transversal perpendiculaire à l'axe de rotation (32) et une longueur (L) mesurée dans le plan transversal, la largeur (W) étant plus grande qu'une distance (D2) entre les deux plans géométriques parallèles (P21, P22), la longueur (L) étant plus grande que le double du rayon de courbure (R2) de la face de palier lisse annulaire convexe (74), la fente d'insertion (66) étant conformée pour permettre l'insertion de l'extrémité d'arbre (70) dans la cavité,
et l'extrémité d'arbre (70) ayant une partie en saillie (76) s'étendant en dehors de l'espace délimité par les deux plans transversaux (P21, P22) et entièrement située à l'intérieur d'une enveloppe sphérique, l'enveloppe sphérique ayant un centre qui est le centre de courbure (C2) de la face de palier lisse annulaire convexe (74) et un diamètre plus petit que le diamètre (D2) du trou d'insertion cylindrique (65).

2. Machine agricole selon la revendication 1, **caractérisée en ce que** le centre de courbure (C1) de la face de palier lisse annulaire concave (64) est situé axialement entre les deux rangées (18, 20) de corps roulants.

3. Machine agricole selon l'une quelconque des revendications précédentes, **caractérisé en ce que** les corps roulants sont des billes.

4. Machine agricole selon la revendication 3, **caractérisé en ce que** chaque rangée (18, 20) de billes (22) forme avec les chemins de roulement intérieurs et extérieurs (24, 26, 28, 30) un roulement à bille à contact oblique.

5. Machine agricole selon la revendication 4, **caractérisé en ce que** le palier à roulement (12) est un roulement à billes à deux rangées de billes à contact oblique conformé en O.

6. Machine agricole selon l'une quelconque des revendications précédentes, **caractérisé en ce que** l'assemblage de bague de roulement intérieure (16) comprend:
- un manchon intérieur (42) sur lequel la face de palier lisse annulaire concave est formée et
- une ou plusieurs bagues intérieures de roulement (46, 48) frettées sur le manchon intérieur (42) et pourvues chacune d'au moins un des chemins de roulement (28, 30).

7. Machine agricole selon la revendication 6, **caractérisé en ce que** la ou les bagues intérieures de roulement (46, 48) consistent en deux bagues intérieures de roulement, pourvues chacune d'un des chemins de roulement annulaires (28, 30).

8. Machine agricole selon la revendication 6 ou la revendication 7, **caractérisé en ce que** le manchon intérieur (42) a un épaulement d'appui (44) sur lequel la ou une des bagues de roulement intérieures (46, 48) est en appui.

9. Machine agricole selon l'une quelconque des revendications précédentes, **caractérisé en ce que** le manchon intérieur (42) est un manchon massif fait d'une pièce.

10. Machine agricole selon l'une quelconque des revendications précédentes, **caractérisé en ce que** l'assemblage de bague de roulement extérieure consiste en une unique bague de roulement extérieure massive (14).

11. Machine agricole selon l'une quelconque des revendications précédentes, **caractérisé en ce que** l'assemblage de bague de roulement extérieure comprend une interface de fixation (34) pour fixer la bague de roulement extérieure à une pièce de machine (82).

12. Machine agricole selon l'une quelconque des revendications précédentes, **caractérisé en ce que** l'extrémité d'arbre est une extrémité d'arbre (70) massive faite d'une pièce.

13. Machine agricole selon l'une quelconque des revendications précédentes, **caractérisé en ce que** l'assemblage de bague de roulement extérieure (14) est fixé à une pièce de machine tournante (82) alors que l'extrémité d'arbre est fixée à une pièce de machine non tournante (84).

14. Machine agricole selon l'une quelconque des revendications précédentes, **caractérisé en ce que** l'assemblage de bague de roulement extérieure est fixé rigidement au tambour (82) et l'extrémité d'arbre (70) est fixée rigidement au flasque latéral (84).
